# EUROPEAN PATENT APPLICATION

(11) **EP 0 898 239 A2**
(43) Date of publication of application: **24.02.1999**
(21) Application number: 98306602.8
(22) Date of filing: 18.08.1998
(51) Int. Cl.: G06K 7/10

(54) **Bar code reader**

(30) Priority: 22.08.1997 GB 9717939
(71) Applicant: HASBRO INTERNATIONAL INC., Pawtucket, RI 02862-1059 (US)
(72) Inventor: Dewar, Alasdair, Aylesbury, Bucks, HP18 9EY (GB); Gunawardana, Raj, Bedford, MK41 7TT (GB)
(74) Representative: Skone James, Robert Edmund

(57) **Abstract**

A bar code reader comprises a guide (10) along which an article carrying a bar code can be moved, the bar code comprising a sequence of bar and space pairs, each pair having substantially the same dimension in the direction of movement of the article, the bar dimension varying within said bar/space pair dimension in accordance with the value encoded. A radiation transmitter (102) transmits radiation towards a bar code on an article as the article is moved along the guide (10) and a radiation receiver (103) receives radiation reflected from the article through an aperture (21). A processor (100) detects each bar/space pair, determines the dimension of the bar in each bar/space pair in the direction of movement of the article, and obtains a value in accordance with a predetermined algorithm based on the determined dimension.

## Description

The invention relates to a bar code reader, game playing apparatus incorporating a bar code reader, and an article carrying a bar code.

Bar codes are used in a wide variety of applications to identify products and the like and in order to read those bar codes, a highly focused laser is used to scan orthogonally across the bars of the bar code. The resulting reflected light is detected and the consequent signal is used to derive a digital representation of the bar code pattern. The scanning action is performed either by oscillating the laser using a reflecting mirror, or by physically and manually moving the beam over the bar code. Due to the beam size and intensity, a very accurate representation of the bar code in electrical form can be obtained using this technology.

Although this known bar code technology is well known and works well, it is not suitable for use in toy and game applications where the use of a laser is hazardous, too costly, and may well cause unacceptable current drain from batteries.

Furthermore, known bar codes typically include a timing line to enable the reader to synchronize with the bar code (see US-A-5446791 and US-A-5627900). However, this takes up space on the article which is undesirable.

In accordance with one aspect of the present invention, a bar code reader comprises a guide along which an article carrying a bar code can be moved, the bar code comprising a sequence of bar and space pairs, each pair having substantially the same dimension in the direction of movement of the article, the bar dimension varying within said bar/space pair dimension in accordance with the value encoded; a radiation transmitter for transmitting radiation towards a bar code on an article as the article is moved along the guide; a radiation receiver for receiving radiation reflected from the article through an aperture; and a processor for detecting each bar/space pair, determining the dimension of the bar in each bar/space pair in the direction of movement of the article, and obtaining a value in accordance with a predetermined algorithm based on the determined dimension.

We have realised that it is possible to implement a bar code reader which can be used safely with toys and games since it incorporates a simple radiation transmitter and receiver. In the preferred example, a simple light emitting diode and phototransistor may be used for these components. This approach is successful in view of the particular nature of the bar code which is detected. By using bar and space pairs having the same dimension, it is possible to accommodate variations in speed as the article is moved along the guide and so it is not necessary to achieve a high speed scanning action.

The guide may comprise a surface along which the article is moved but conveniently comprises a slot into which the article can be inserted. This is particularly convenient where the article comprises a card or the like.

Although the invention is particularly suitable for use with infra-red radiation, other forms of radiation including visible and ultra-violet may also be used providing the bar code is printed in appropriate inks.

In order to enhance the resolution, the dimension of the aperture in the direction of movement of the article should be chosen depending upon the minimum dimension of a bar in the feed direction of the article. Preferably, the aperture has a dimension in the direction of movement of the article which is not greater than the minimum dimension of a bar of the bar code.

The predetermined algorithm can take a variety of forms as will be evident to a person of ordinary skill in the art. For example, the dimension of the bar in each bar/space pair could be determined directly but in the preferred approach, the predetermined algorithm comprises determining the ratio between the dimensions of the bar and space of a bar/space pair in the direction of movement of the article. This enables variations in the speed with which the article is moved to be compensated for.

The determined ratio can then be used to identify a particular value, for example by comparing that ratio with a predetermined list of equivalent values.

The bar code reader according to the invention can be used in many applications including for example commodities for sale and the like. However in the preferred application, game playing apparatus comprises a bar code reader according to the invention; at least one of an input device and an output device connected to the processor; and a number of articles each carrying a respective unique bar code whereby the processor determines the value defined by a bar code on an article as the article is moved along the guide to determine information relating to the article.

The advantages of the bar code reader in game playing apparatus have already been mentioned above and include low cost and safety.

There are many different types of game playing apparatus which could be implemented. For example, in a very simple game, the articles could carry pictures of certain subjects whose names can be identified via the bar code. The processor will then cause that name to be displayed when the article is moved along the guide.

In a more sophisticated game, the processor is adapted to respond to information entered via the input device and the read bar code to generate outputs on the output device in accordance with pre-programmed game play rules. This enables a player to interact with the apparatus. For example, the processor could cause a choice of subjects to be displayed and the user is then invited to select one of those as corresponding to the subject displayed on the article. More complex games can also be implemented as will be described below.

The articles preferably comprise cards carrying printed information on one surface and the bar code on the opposite surface, the bar code being related to the information printed on the one surface . Cards are particularly suitable for handling in game applications.

The input device may comprise a keypad or the like but preferably comprises a set of buttons.

The output device may be a monitor, LCD display or the like and/or a loudspeaker. The use of a loudspeaker is particularly convenient where a game is directed at very young children who may not be able to read or to a group of players.

In accordance with a second aspect of the present invention, we provide an article which carries a bar code comprises a sequence of bar and space pairs, each pair having substantially the same dimension in the direction of movement of the article, the bar dimension varying within the said bar/space pair dimension in accordance with the value encoded.

The bar code may define letters or other alphanumeric characters but is particularly convenient for defining a value to base N, the bar code having N bar/space pairs.

In order to locate the bar code initially, an additional bar may be located upstream of the bar/space pairs. This may also be used to distinguish between each end of the bar code so that the code can only be read in one direction. However, in a preferred approach, the leading edge of the article in the code reading direction is used as a reference point, the first bar/space pair being located a known distance from the edge.

An example of a bar code reader and a game incorporating such a reader will now be described with reference to the accompanying drawings, in which:-
Figure 1 is a perspective view from above of game apparatus incorporating a bar code reader;
Figure 2 is an exploded view of the apparatus shown in Figure 1;
Figure 3 is a plan of the apparatus shown in Figure 2 with some parts omitted;
Figure 4 illustrates detail E from Figure 3 in enlarged form;
Figure 5 is a section taken along the line C-C in Figure 3;
Figure 6 is an enlarged view of the rear surface of a card;
Figures 7 and 8 are a flow diagram illustrating a programme implemented by the processor; and,
Figure 9 is a circuit diagram of the components on the printed circuit board and components to which the PCB is connected.

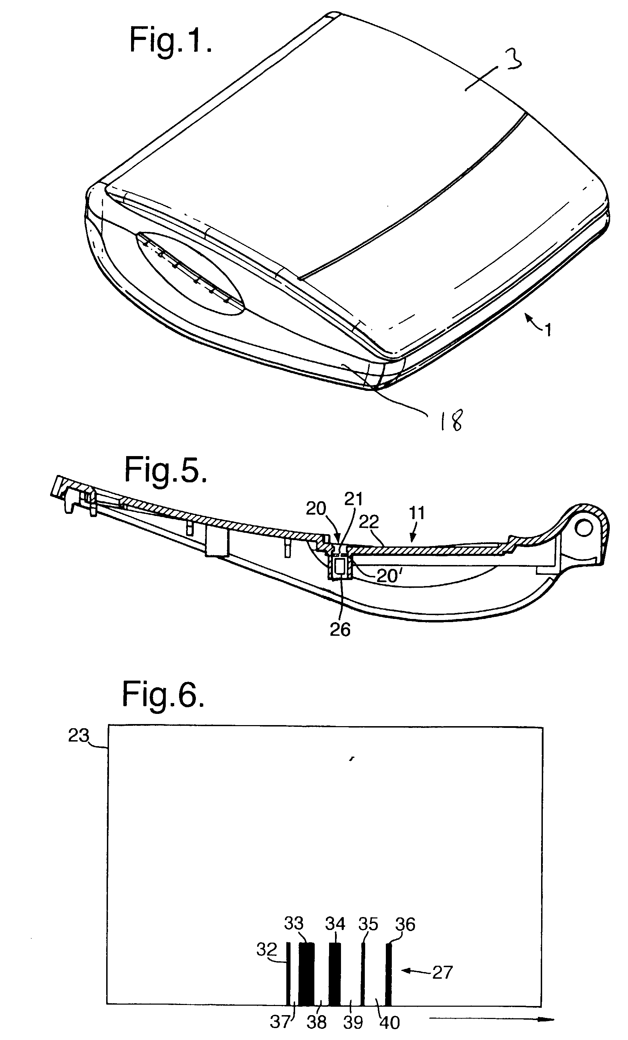

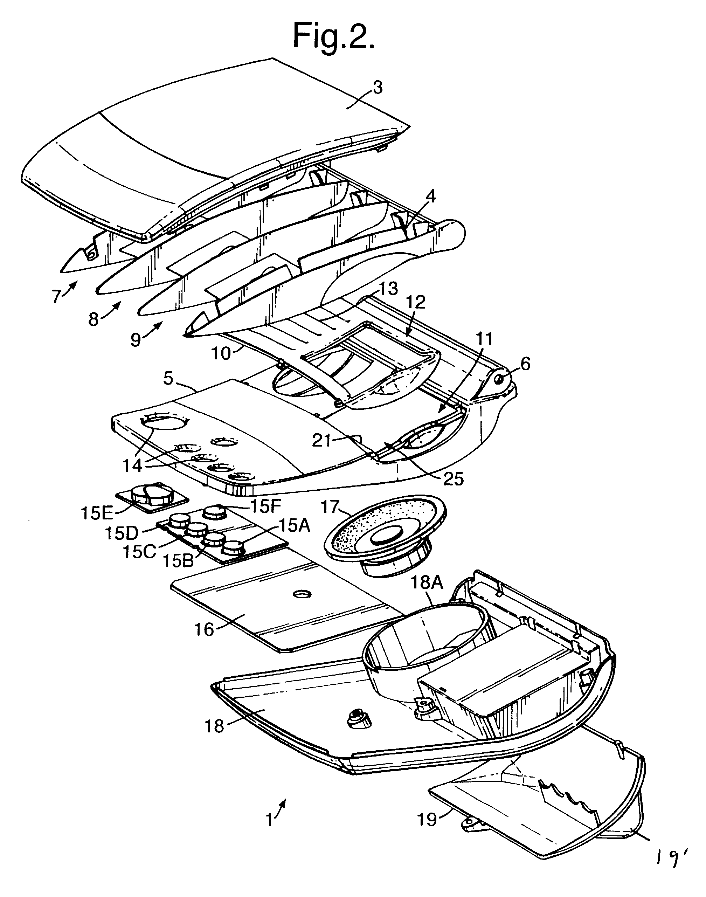

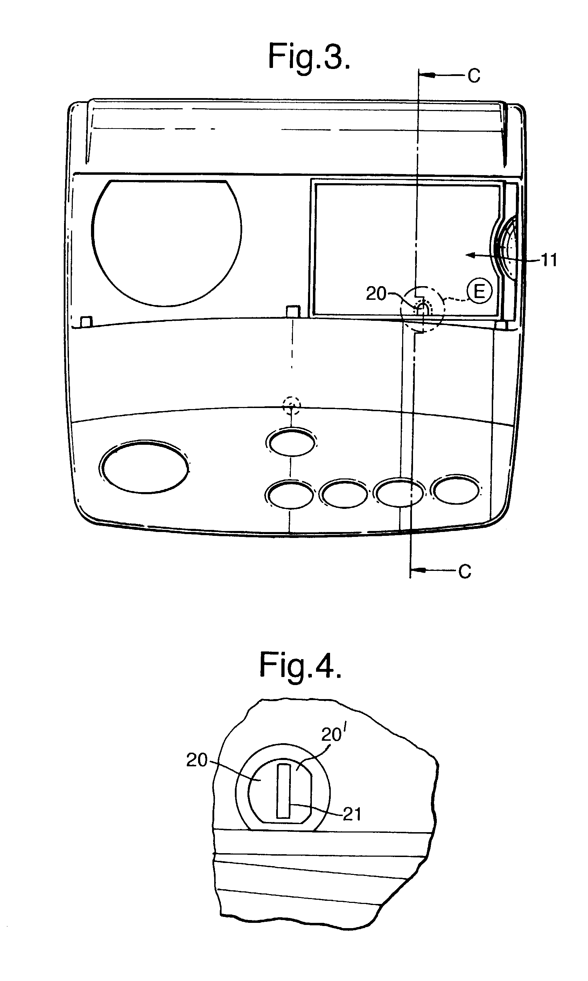

Referring to Figure 1, a game unit 1 comprises a casing into which a card is inserted in use. Referring to Figure 2, the unit 1 comprises an upper casing moulding 3 which clips into a card holder 4. The card holder 4 is pivotally mounted to a frame 5 at pivot points 6. The card holder 4 holds up to 120 cards in slots 7-9. A slide guide 10 slots into a recess 11 in the frame 5. The recess 11 has a small aperture 20 (shown in detail in Figures 3-5). The slide guide 10 has a window 12 and a speaker grill 13. The frame 5 has holes 14 which receive buttons 15. A PCB 16 carries processing electronics (not shown) which actuate a speaker 17. The base of the casing comprises a lower casing moulding 18, having a speaker housing 18A, and a battery enclosure 19. In Figure 2 (but not Figure 1), the enclosure 19 has a leg 19'.

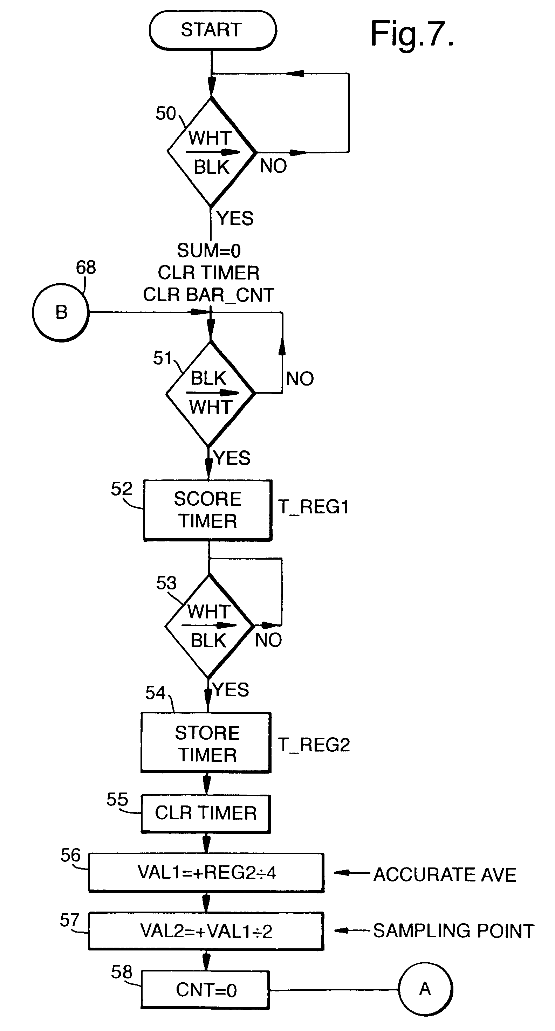

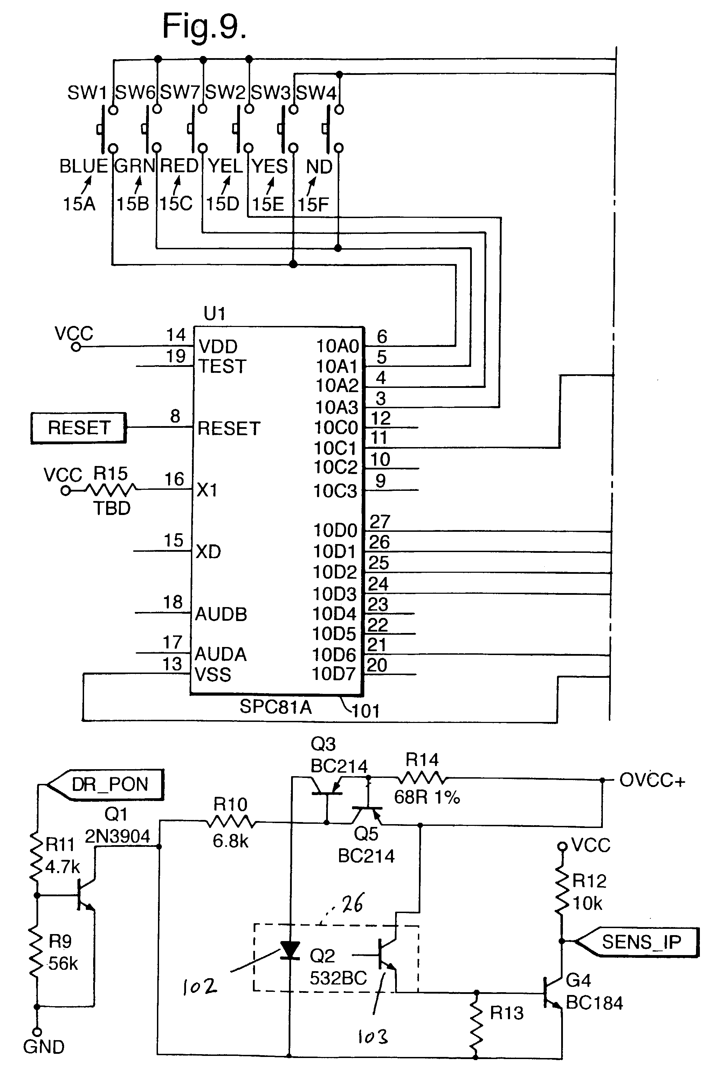

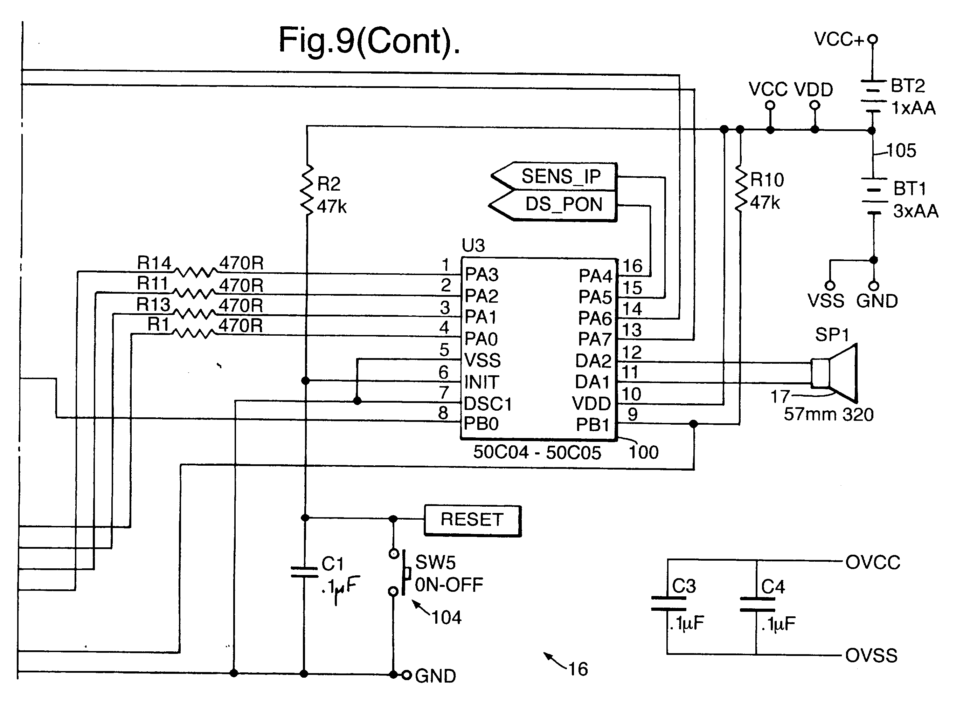

Figure 3 is a plan view of the unit 1 with the upper casing moulding 3, card holder 4 and slide guide 10 removed. Referring to Figures 4 and 5, an infra-red optical switch or reader 26 such as a Kodenshi SG2BC type, is located in a housing 20 and is covered by a black insert 20' defining a slot 21 having a width of 0.6mm and allowing the reader to illuminate and view a bar code. The black insert 20' prevents light from being reflected by other parts of the unit. The underside of the slide guide 10 is also coloured black to prevent unwanted reflections on to the reader 26. The switch 26 is connected to a microprocessor 100 (Figure 9) on the PCB 16 which responds to signals from the switch as will be described below. The base 22 of recess 11 has a thickness of approximately 1mm. The switch 26 is positioned so that it will be no more than 2mm from a bar code to be read. A typical dimension is 1mm.

Ideally, the dimension of the slot 21 in the direction of movement of the card should be small compared with the width of a bar on the bar code. This increases the degree of resolution achieved and also allows the reader more easily to detect transitions from a space to a bar whatever the speed of insertion of the card.

The components on the printed circuit board 16 are shown in more detail in Figure 9. The PCB 16 includes the microprocessor 100 which is connected to a data store 101 which stores speech data and the like. The microprocessor is also connected to the optical switch 26 which includes a light emitting diode 102 and a photosensitive transistor 103. The diode 102 generates infra-red radiation in response to a control signal and any reflected radiation is detected by the transistor 103 which will switch on causing a corresponding signal to be fed to the microprocessor 100.

The PCB 16 is also connected to an ON/OFF switch 104 (not shown in Figure 2) and to the switches 15A-15F. The switches 15A-15D are coloured blue, green, red, and yellow respectively and this enables those switches to be identified during the playing of a game. The switches 15E,15F are labelled "YES" and "NO". The components are powered from a battery 105 located in the enclosure 19.

In use, a card is fed into a slot 25 defined between the slide guide 10 and the base 22 of the recess 11 with the rear surface of the card facing the slot 21. The card 23 has typical dimensions of 70mm x 45mm. An example of the rear surface of a card 23 is shown in Figure 6. The front (not shown) of the card carries a question which can be read by a player through window 12. The rear of the card is provided with a bar-code 27 comprising a series of bars 32-36 which are formed from black ink which does not reflect the infra-red radiation emitted by the infra-red optical switch 26. The bars 32-36 alternate with four spaces 37-40 where no ink is printed. The rear of the card 23 may be red or preferably white and hence the spaces 37-40 reflect infra-red radiation emitted by the optical device. The bar code 27 identifies the question on the front face of the card.

The bar-code encodes a ternary number ABC in the form A3∗∗2 + B3∗∗1 + C3**0, where "**" demotes "raised to the power". The right-hand bar 36 is the first bar to be encountered by the optical device on insertion of the card 23. The bar 36 provides run-in information and parity information allowing the software to detect the start of the bar code 27. The number ABC is encoded in the widths of the three data bars 33,34 and 35. A bar width in the feed direction of 1mm (eg. bar 35) defines a value 0. A width of 2mm (eg. bar 34) defines a value 1. A width of 3mm (eg. bar 35) defines a value 2. In the example of Figure 6 the bar-code encodes the ternary number 210 (decimal 21) i.e. A=2, B=1, C=0. The final bar 32 is a run-out bar.

The width of the three spaces 37,38 and 39 are 1mm,2mm and 3mm respectively. Therefore each bar/space pair (33,37), (34,38) and (35,39) has a known predetermined width of 4mm. (In some cases this may be increased to 4.5mm). Furthermore, one edge of each bar/space pair will always be detectable since even a value "0" is encoded with a bar. This property is used to account for variations in the speed of insertion of the card 23.

As the card 23 is inserted in the slot 25, the LED 102 of the optical switch irradiates the card with infra-red radiation which is initially reflected but will then be absorbed when it impinges on the bar 36. This change will be detected by the transistor 103 of the switch 26 and an appropriate signal sent to the PCB 16. A further signal will be sent when the card starts to reflect radiation from the space 40 and so on.

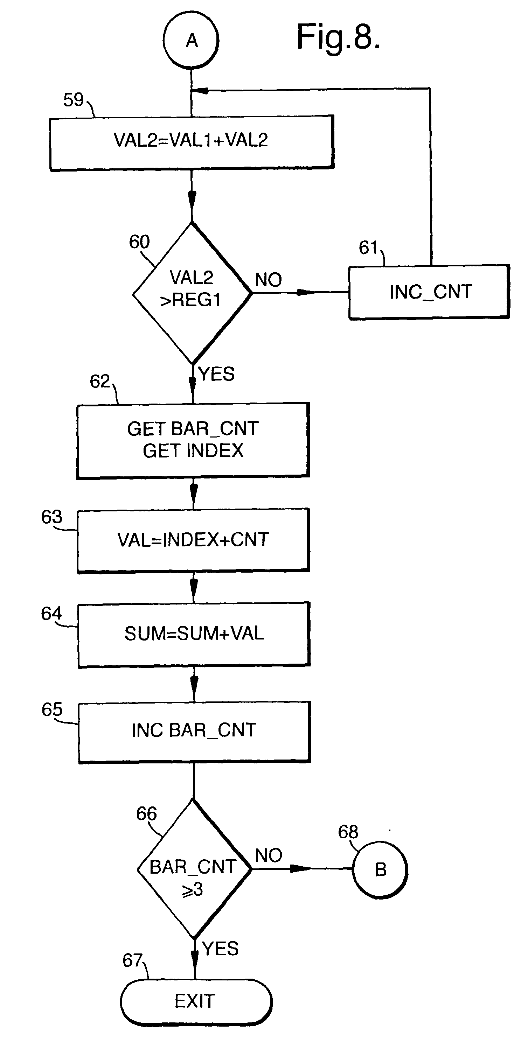

The software illustrated in Appendix 1 first processes the signals corresponding to the run-in bar 36 and run-in space 40. Then the microprocessor 100 performs the process illustrated in Figures 7 and 8 to decode the number ABC.

At 50 the first white-to-black transition (ie. the front edge of bar 35) is detected. The software then runs a timer until the next black-to-white transition (ie. the back edge of bar 35 and front edge of space 39) is detected at 51. The value of the timer is then stored as T REG1 at 52. Hence T_REG1 gives the time taken to scan bar 35. The software then runs the timer until the next white-to-black transition (ie. the front edge of bar 34 and back edge of space 39) is detected at 53. The value of the timer is then stored as T_REG2 at 54. Hence T_REG2 gives the time taken to scan bar 35 and the space 39. The timer is then cleared at 55.

In steps 56 and 57 the software calculates an accurate average VAL1=T_REG2/4 and a sampling point VAL2=VAL1/2 (ie. VAL2=T_REG2/8). A count value CNT is initialised at 58. The sampling point VAL2 is then incremented at 59 by the accurate average VAL1 until VAL2 is determined to be greater than T_REG1 at 60. The count value CNT is incremented by one at 61 for each iteration.

Taking the example of bar 35 (which encodes ternary value 0) and space 39, these are related by the ratio T_REG1=1/4(T_REG2). Therefore VAL1=(T_REG1) and VAL2=1/2(T_REG1). In this case the first iteration of 59 returns a value of 3/2(T_REG1), which is greater than T_REG1. Therefore CNT is not incremented at 61 and remains as value 0. At 62 the software retrieves the variable BAR_CNT (ie. the number of the bar, which in the case of the first bar 35 is 1). The variable BAR_CNT corresponds with the following values for variable INDEX:

| BAR_CNT | INDEX |
|---|---|
| 1 | 1 |
| 2 | 3 |
| 3 | 9 |

Hence BAR_CNT=1 corresponds with INDEX=1. The value encoded by bar 35 is calculated at 63 as VAL=INDEX*CNT (in the case of bar 35, VAL=1*0=0).

The sum (variable SUM) encoded by the bar-code is then incremented at 64 by value VAL (ie. SUM=SUM+VAL). The variable BAR_CNT is incremented by 1 at 65. If BAR_CNT is greater than, or equal to three (ie. when the last data bar 33 has been read) then the process exits at 66,67. Otherwise the process returns at 68 to read the next bar (in this case bar 34).

In the case of bar/space pair (34,38), T_REG1=1/2 (T_REG2). Hence VAL1=1/2 (T_REG1) and VAL2 starts as 1/4(T_REG1) at 57. In the first iteration of 59 VAL2 is incremented to 3/4(T_REG1). In the second iteration of 59 (CNT=1), VAL2 is incremented to 5/4(T_REG1) which is greater than T_REG1 and hence the value of CNT is returned at 60 as value 1.

In the case of bar/space pair (33,37), T REG1=3/4(T_REG2). Hence VAL1=1/3(T_REG1) and VAL2 starts as 1/6 (T_REG1) at 57. In the first iteration of 59, VAL2 is incremented to 1/2(T_REG1). In the second iteration of 59 (CNT=1), VAL2 is incremented to 5/6(T_REG1). In the third iteration of 59 (CNT=2) VAL2 is incremented to 7/6(T_REG1) which is greater than T_REG1 and hence the value of CNT is returned at 60 as value 2.

Since the ratio T_REG1/T_REG2 can only take the values 1/4,2/4 or 3/4, the system can read the bar-code regardless of the speed of insertion of the card (which will vary the absolute values of T_REG1 and T_REG2).

In use, a personality profiling game is played by up to four players as follows. A card 23 is taken from the card holder 4 and inserted into slot 2 with the upper casing moulding and card holder 4 raised. The processor 100 reads the bar code 27 on the card 23 to return a ternary number ABC which uniquely identifies the card. Each player takes the unit, reads the question on the front of the card through window 12 and presses one of the buttons 15 to answer the question. Since the lid 3 is raised, the other players cannot see what answer is given by the other players. Each player's answer is then stored and the process is repeated for another 9 cards, giving a total of 10 answers to 10 questions for each player.

The processor 100 then builds up a profile of each player based on the player's answers to the questions. Each player is then asked via the display by the processor 100 which player they consider to have which profile. For each player, a group of profiles is offered and each player then has to make a selection. The winner is the player who guesses the most correct profiles.

Appendix 2 illustrates modified software for handling the start of a processing operation where no bar 36 is provided and the start point is determined by detecting the leading edge of the card. After this initial difference, the software is the same as in Appendix 1.

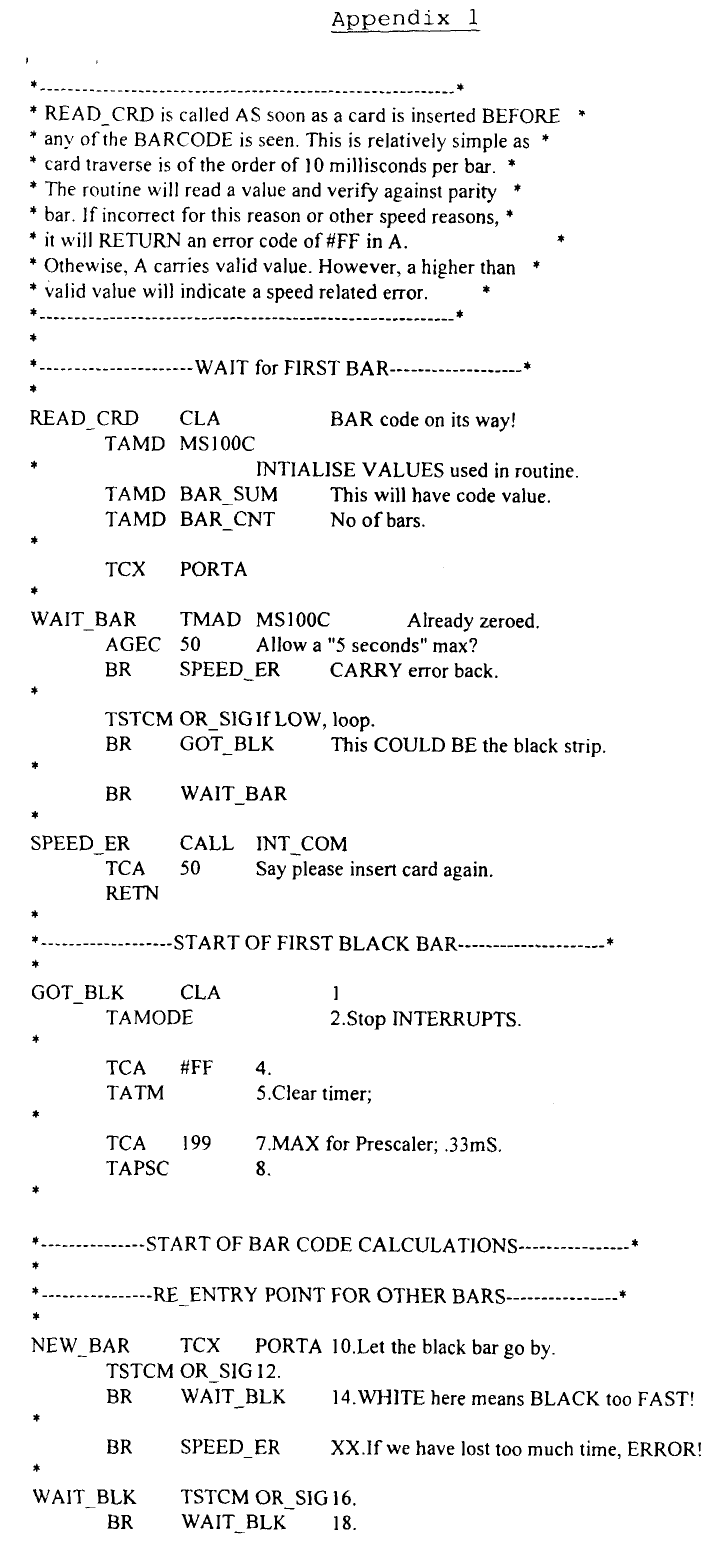

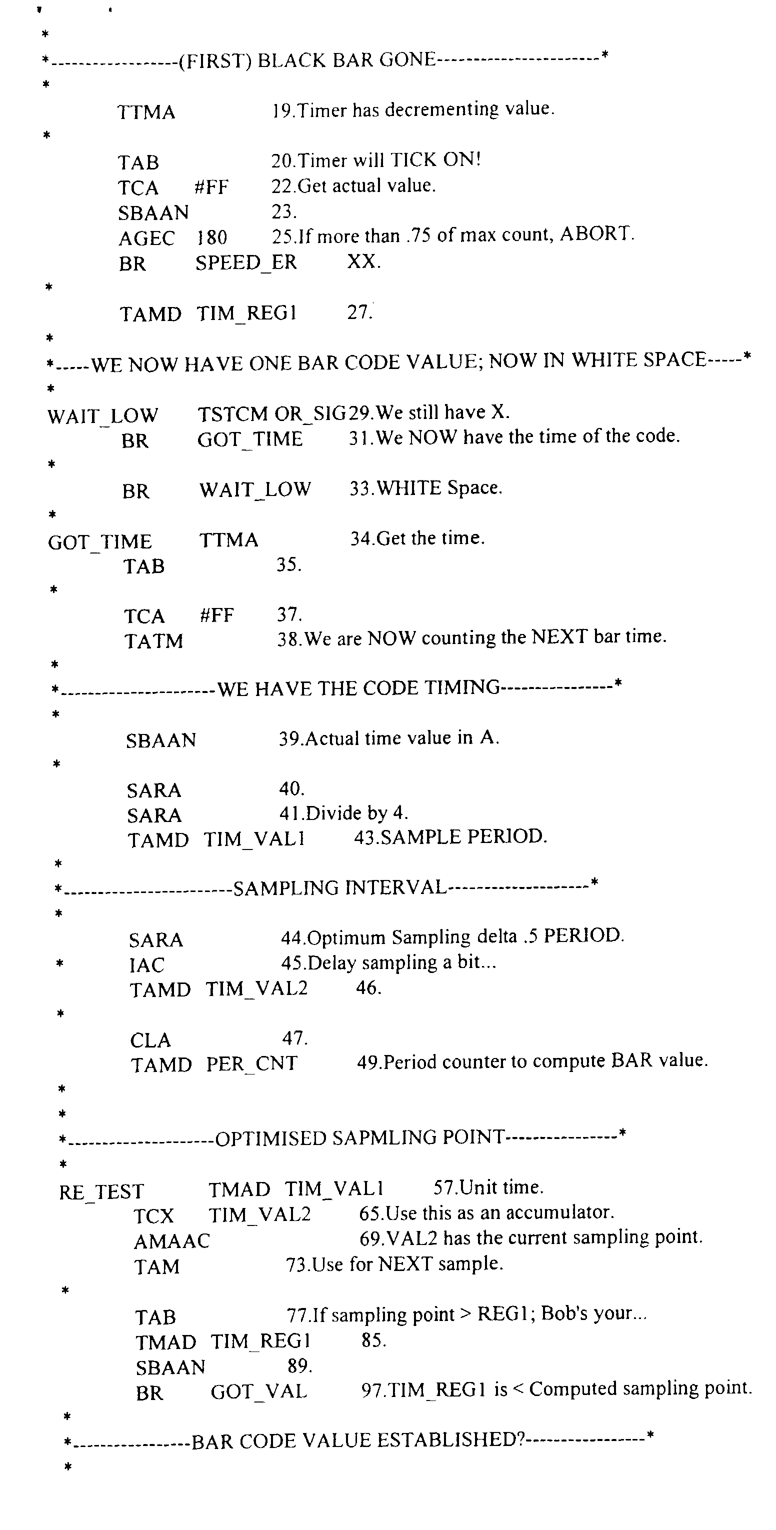

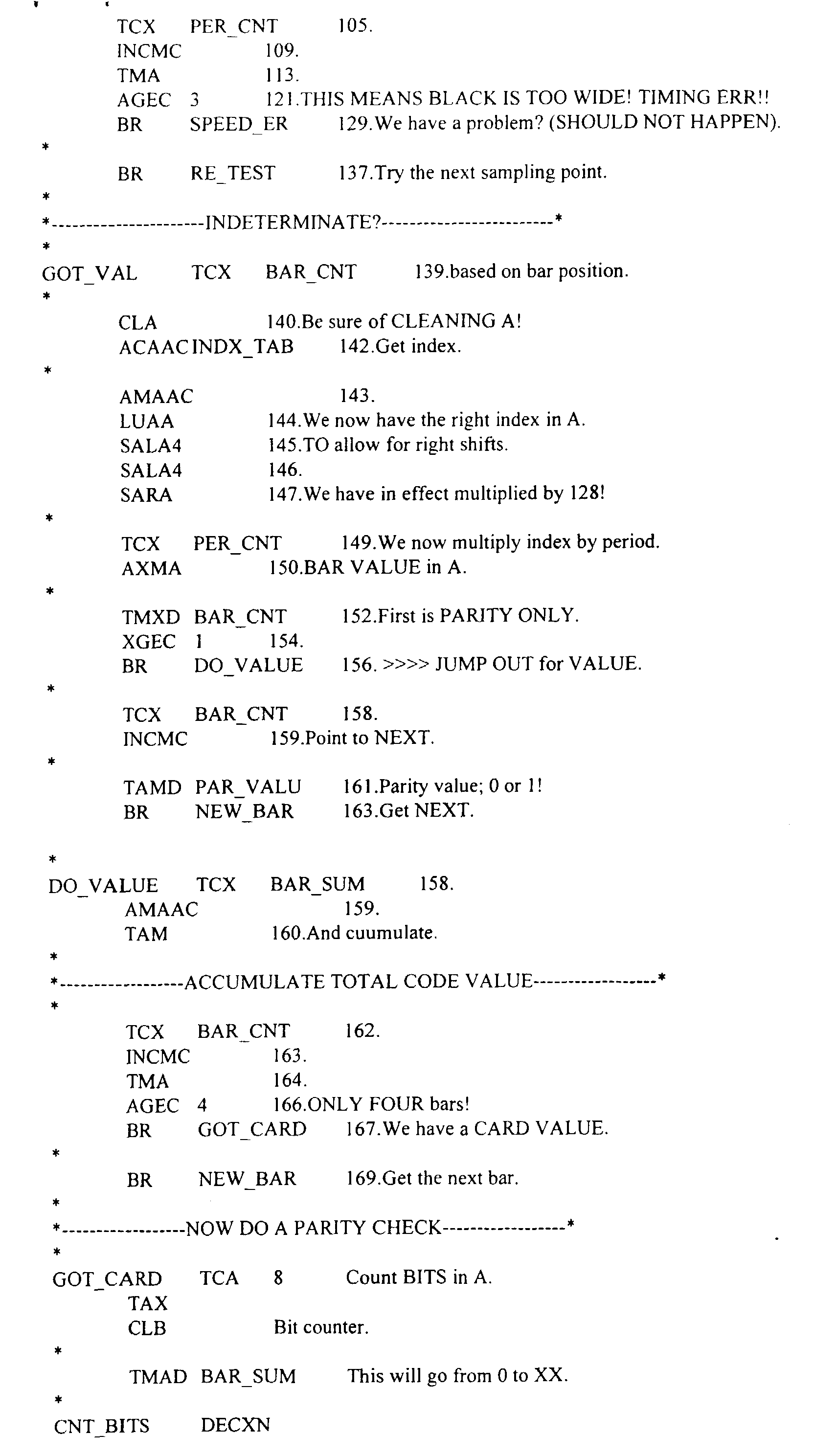

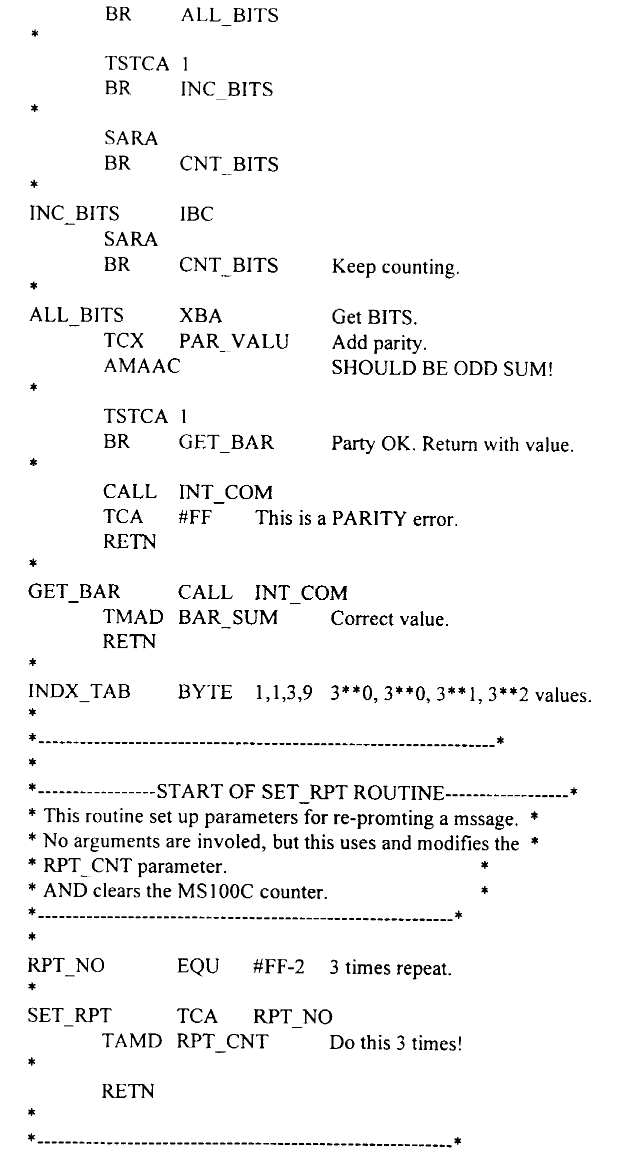

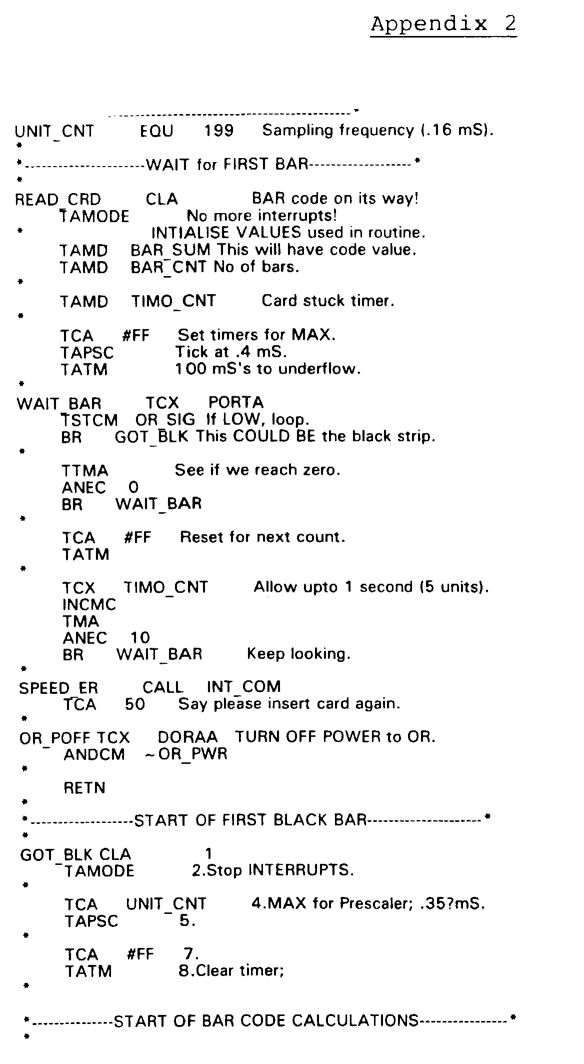

## Claims

1. A bar code reader comprising a guide along which an article carrying a bar code can be moved, the bar code comprising a sequence of bar and space pairs, each pair having substantially the same dimension in the direction of movement of the article, the bar dimension varying within said bar/space pair dimension in accordance with the value encoded; a radiation transmitter for transmitting radiation towards a bar code on an article as the article is moved along the guide; a radiation receiver for receiving radiation reflected from the article through an aperture; and a processor for detecting each bar/space pair, determining the dimension of the bar in each bar/space pair in the direction of movement of the article, and obtaining a value in accordance with a predetermined algorithm based on the determined dimension.

2. A bar code reader according to claim 1, wherein the guide is defined by a slot into which the article can be inserted.

3. A bar code reader according to claim 1 or claim 2, wherein the radiation comprises infra-red radiation.

4. A bar code reader according to any of the preceding claims, wherein the aperture has a dimension in the direction of movement of the article which is not greater than the minimum dimension of a bar of the bar code.

5. A bar code reader according to any of the preceding claims, wherein the predetermined algorithm comprises determining the ratio between the dimensions of the bar and space of a bar/space pair in the direction of movement of the article.

6. A bar code reader according to claim 5, wherein the predetermined algorithm further comprises comparing the determined ratio with a predetermined list of equivalent values.

7. Game playing apparatus comprising a bar code reader according to any of the preceding claims; at least one of an input device and an output device connected to the processor; and a number of articles each carrying a respective unique bar code whereby the processor determines the value defined by a bar code on an article as the article is moved along the guide to determine information relating to the article.

8. Apparatus according to claim 7, wherein the processor is adapted to respond to information entered via the input device and the read bar code to generate outputs on the output device in accordance with pre-programmed game play rules.

9. Apparatus according to claim 7 or claim 8, wherein the articles comprise cards carrying printed information on one surface and the bar code on the opposite surface, the bar code being related to the information printed on the one surface.

10. Apparatus according to any of claims 7 to 9, wherein the input device comprises a set of buttons.

11. Apparatus according to any of claims 7 to 10, wherein the output device comprises a loud speaker.

12. An article carrying a bar code comprising a sequence of bar and space pairs, each pair having substantially the same dimension in the direction of movement of the article, the bar dimension varying within the said bar/space pair dimension in accordance with the value encoded.

13. An article according to claim 12, wherein the bar code defines a value to base N, the bar code having N bar/space pairs.

14. An article according to claim 12 or claim 13, further comprising an additional bar located upstream of the bar/space pairs so as to be detected initially by a bar code reader.

15. An article according to any of claims 12 to 14 in the form of a card.
